# EUROPEAN PATENT APPLICATION

(11) **EP 4 194 812 A2**
(43) Date of publication of application: **14.06.2023**
(21) Application number: 22210300.4
(22) Date of filing: 29.11.2022
(51) Int. Cl.: G01C 21/20, B62D 15/02, B60W 30/06

(54) **METHOD AND APPARATUS FOR PROCESSING IMAGE, ELECTRONIC DEVICE, AND STORAGE MEDIUM**

(30) Priority: 08.12.2021 CN 202111512249
(71) Applicant: Apollo Intelligent Driving Technology (Beijing) Co., Ltd., Haidian District Beijing 100085 (CN)
(72) Inventor: HU, Bin, BEIJING (CN); BI, Guiguan, BEIJING (CN)
(74) Representative: Bringer IP

(57) **Abstract**

The present disclosure provides a method and apparatus for processing an image, an electronic device, a vehicle, a server, and a storage medium, which relates to a field of artificial intelligence technology, and in particular, to the fields of autonomous driving, intelligent transportation, and the like. The specific implementation scheme is as follows: sending (S101) at least one piece of image information to a server, the at least one piece of image information being collected by a vehicle during driving in a target area; acquiring (S102) a first mapping result generated by the server, the first mapping result including first environmental characteristic information in the target area; and storing (S103) the first mapping result as the map information of the target area, the map information of the target area being used for driving the autonomous driving of the vehicle in the target area.

## Description

### TECHNICAL FIELD

The present disclosure relates to a field of computer technology, and in particular, to the field of artificial intelligence technology such as autonomous driving and intelligent transportation.

### BACKGROUND

With the development of computer technology, the field of artificial intelligence has also developed rapidly, especially intelligent transportation, autonomous driving and other technologies have been more and more widely used. Among them, the autonomous driving is a function that more and more vehicles have. In such vehicles with the autonomous driving function, it is necessary to drive their autonomous driving based on the locally saved map information. However, how to get the map information for driving the autonomous driving of the vehicle more efficiently becomes a problem to be solved.

### SUMMARY

The present disclosure provides a method and apparatus for processing an image, an electronic device, a vehicle, a server, and a storage medium.

According to a first aspect of embodiments of the present disclosure, a method for processing an image is provided. The method includes: sending at least one piece of image information to a server, the at least one piece of image information being collected by a vehicle during driving in a target area; acquiring a first mapping result generated by the server, the first mapping result including first environmental characteristic information in the target area; and storing the first mapping result as map information of the target area, the map information of the target area being used to drive autonomous driving of the vehicle in the target area.

According to a second aspect of embodiments of the present disclosure, a method for processing an image is provided. The method includes: processing received at least one piece of image information, to obtain a first mapping result, the at least one piece of image information being collected by a vehicle during driving in a target area, and the first mapping result including first environmental characteristic information in the target area; and sending the first mapping result.

According to a third aspect of embodiments of the present disclosure, an apparatus for processing an image is provided. The apparatus includes: a first sending module configured to send at least one piece of image information to a server, the at least one piece of image information being collected by a vehicle during driving in a target area; a first receiving module configured to acquire a first mapping result generated by the server, the first mapping result including first environmental characteristic information in the target area; and a first processing module configured to store the first mapping result as map information of the target area, the map information of the target area being used to drive autonomous driving of the vehicle in the target area.

According to a fourth aspect of embodiments of the present disclosure, an apparatus for processing an image is provided. The apparatus includes: a second processing module configured to process received at least one piece of image information, to obtain a first mapping result, the at least one piece of image information being collected by a vehicle during driving in a target area, and the first mapping result including first environmental characteristic information in the target area; and a second sending module configured to send the first mapping result.

According to a fifth aspect of embodiments of the present disclosure, an electronic device is provided. The electronic device includes: at least one processor; and a memory communicatively connected to the at least one processor. The memory stores instructions executable by the at least one processor, the instructions when executed by the at least one processor, causing the at least one processor to execute the method for processing an image in the first aspect.

According to a sixth aspect of embodiments of the present disclosure, an electronic device is provided. The electronic device includes: at least one processor; and a memory communicatively connected to the at least one processor. The memory stores instructions executable by the at least one processor, the instructions when executed by the at least one processor, causing the at least one processor to execute the method for processing an image in the second aspect.

According to a seventh aspect of embodiments of the present disclosure, a non-transitory computer-readable storage medium storing a computer instruction is provided. The computer instruction is used to cause a computer to execute any one of the methods according to embodiments of the present disclosure.

According to an eighth aspect of embodiments of the present disclosure, a computer program product is provided. The computer program product includes a computer program, and when the computer program is executed by a processor, any one of the methods according to embodiments of the present disclosure is implemented.

According to a ninth aspect of embodiments of the present disclosure, a vehicle is provided. The vehicle includes the electronic device in the fifth aspect of embodiments of the present disclosure.

According to a tenth aspect of embodiments of the present disclosure, a server is provided. The server includes the electronic device in the sixth aspect of embodiments of the present disclosure.

It should be understood that, the content described in this part is not intended to identify key or important features of embodiments of the present disclosure, nor is it used to limit the scope of the present disclosure. Other features of the present disclosure will be easily understood by the following description.

In the solution provided by embodiments, the image information may be uploaded to the server so that the server processes the image information to obtain the first mapping result. After the first mapping result is obtained from the server, the first mapping result may be stored as the map information of the target area for the subsequent autonomous driving of the vehicle. Because the server has higher computing power, the mapping efficiency can be ensured by using the server to generate the first mapping result, and the map information of the final target area can be obtained in a timely and efficient manner, so as to improve the overall processing efficiency.

### BRIEF DESCRIPTION OF THE DRAWINGS

The accompanying drawings are used to better understand the present solution, and do not constitute a limitation to the present disclosure.
FIG. 1 is a flowchart of a method for processing an image according to embodiments of the present disclosure.
FIG. 2 is a scene diagram of a mapping task for autonomous driving according to embodiments of the present disclosure.
FIG. 3 is a flowchart of a method for generating a second mapping result and replacing the first mapping result according to embodiments of the present disclosure.
FIG. 4 is a flowchart of a method for generating a second mapping result based on at least one piece of image information according to embodiments of the present disclosure.
FIG. 5 is a flowchart of a method for processing an image according to embodiments of the present disclosure.
FIG. 6 is a flowchart of a method for generating a first mapping result according to embodiments of the present disclosure.
FIG. 7 is another flowchart of a method for generating a first mapping result according to embodiments of the present disclosure.
FIG. 8 is an exemplary flowchart of a method for processing an image according to embodiments of the present disclosure.
FIG. 9 is a structural diagram of an apparatus for processing an image according to embodiments of the present disclosure.
FIG. 10 is a structural diagram of an apparatus for processing an image according to embodiments of the present disclosure.
FIG. 11 is another structural diagram of an apparatus for processing an image according to embodiments of the present disclosure.
FIG. 12 is a block diagram of an electronic device for implementing a method for processing an image according to embodiments of the present.

### DETAILED DESCRIPTION

The following describes exemplary embodiments of the present disclosure with reference to the accompanying drawings, where various details of the embodiments of the present disclosure are included to facilitate understanding, and should be considered as merely exemplary. Therefore, those of ordinary skill in the art should realize that various changes and modifications can be made to the embodiments described herein without departing from the scope and spirit of the present disclosure. Likewise, for clarity and conciseness, descriptions of well-known functions and structures are omitted in the following description.

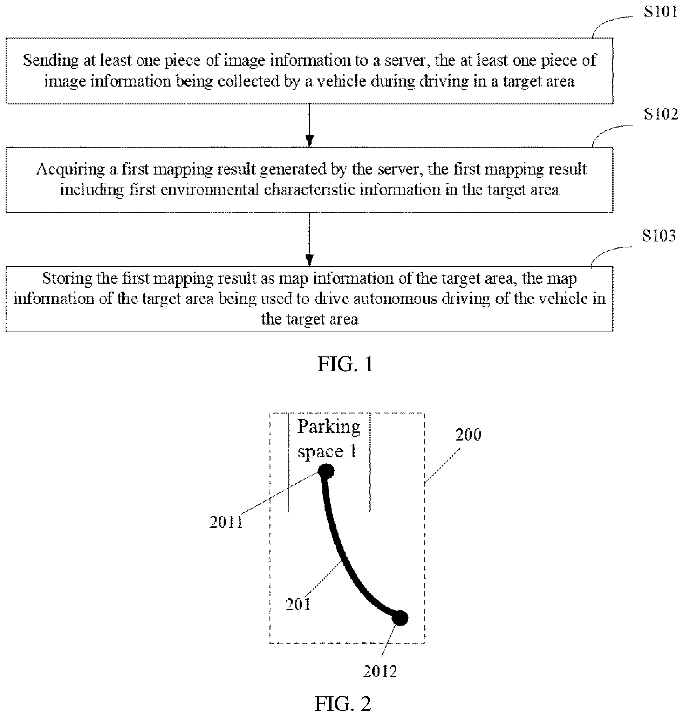

In the first aspect of embodiments of the present disclosure, provided is a method for processing an image. As shown in FIG. 1, the method includes the followings.

In S101, at least one piece of image information is sent to a server, the at least one piece of image information being collected by a vehicle during driving in a target area.

In S102, a first mapping result generated by the server is acquired, the first mapping result including first environmental characteristic information in the target area.

In S103, the first mapping result is stored as map information of the target area, the map information of the target area being used to drive autonomous driving of the vehicle in the target area.

The above solution may be executed by an apparatus for processing an image, which may be provided in a vehicle. The vehicle may be a vehicle with autonomous driving function.

Before S101, the method may further include: starting a mapping task for autonomous driving. The mapping task for autonomous driving may be associated with the target area. The target area may be any selected area, such as an area where the parking space is located, a section of road, or the like, which is not exhaustive.

Further, the mapping task for autonomous driving may be further related to a driving route in the target area, and the driving route in the target area may further include a starting point and an ending point. Taking FIG 2 as an example, the mapping task for autonomous driving may be a mapping task for autonomous driving of parking into a parking space, the mapping task for autonomous driving of parking into the parking space may be related to a driving route 201 within the area 200 where the parking space 1 near the house is located, and the driving route 201 may have a set starting point 2011 and a set ending point 2012.

The mapping task for autonomous driving may be started by control of a user, or the mapping task for autonomous driving may be started automatically.

The processing of controlling by a user to start the mapping task for autonomous driving may include: the user selects in the interactive interface of the vehicle to start the mapping task for autonomous driving; or the user sets the mapping task for autonomous driving in the setting interface for controlling a target application of the vehicle in a terminal device, and when the setting of the mapping task for autonomous driving is completed, the terminal device sends the mapping task for autonomous driving to the apparatus for processing an image. The terminal device may be any one of a smart phone, a tablet computer, a desktop computer, or other devices used by the user.

The process of automatically starting the mapping task for autonomous driving may include: in a case of that the historical map information of the target area has been stored, if it is detected that the vehicle currently reaches any position in the target area, automatically starting a new mapping task for autonomous driving to update the historical map information of the target area.

After the mapping task for autonomous driving is started, controlling the vehicle to collect at least one piece of image information in real time during driving in the target area, then, the process of transmitting the at least one piece of image information to the server described in S101 is performed.

The collecting of the at least one piece of image information in real time may specifically include: controlling an image capturing unit of the vehicle to perform collecting in real time based on a preset collecting interval to obtain the at least one piece of image information.

The image capturing unit may be a camera or a monitor installed on the vehicle. The preset acquiring interval may be a preset time acquiring interval or a preset distance acquiring interval. Separately, the preset time acquiring interval may refer to acquiring once per L time units, where L is a positive integer and may be set according to the actual situation. The time units may be seconds, milliseconds, etc., which are not exhaustive here. The preset distance acquiring interval may refer to acquiring once per T distance units, where T is a positive integer, which may be set according to the actual situation. The distance units may be 0.5m, 1m, 100cm, etc., which are not exhaustive here.

The first mapping result may include first environmental characteristic information in the target area, and the number of the first environmental characteristic information contained in the first mapping result may be one or more. The first mapping result may specifically be a point cloud map. Accordingly, the first environmental characteristic information may specifically refer to the point cloud area information of the road marking points in the target area. Taking a road marking point as a ground marking line as an example, the first mapping result may include the point cloud area information of the ground marking line in the target area.

The storing of the first mapping result as the map information of the target area may include: in a case that the historical map information of the target area is not stored, directly storing the first mapping result as the map information of the target area; or, in a case that the historical map information of the target area has been stored, replacing the historical map information of the target area by the first mapping result and storing the first mapping result as the new map information of the target area.

In the solution provided in the first aspect of embodiments of the present disclosure, the image information may be uploaded to the server so that the server processes the image information to obtain the first mapping result. After the first mapping result is obtained from the server, the first mapping result may be saved as the map information of the target area for subsequent driving the autonomous driving of the vehicle. Because the server has higher computing power, the mapping efficiency can be guaranteed by using the server to generate the first mapping result, and the map information of the target area can be obtained in a timely and efficient manner, so as to improve the overall processing efficiency.

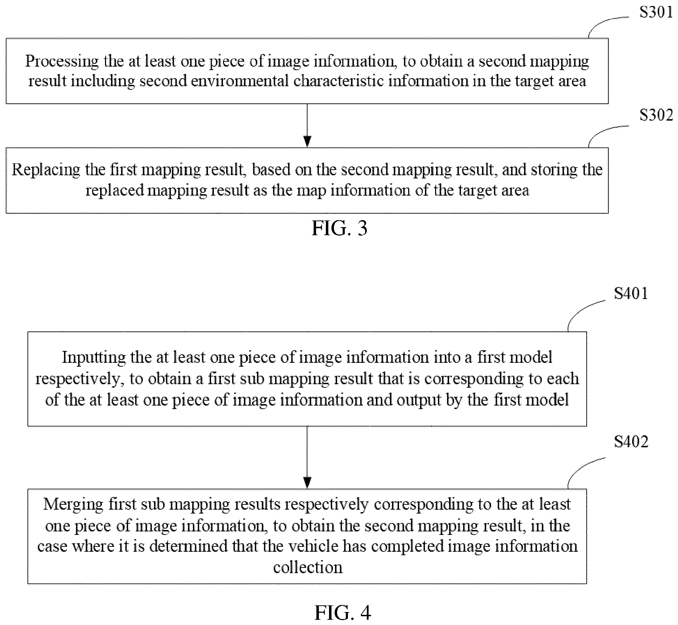

In one implementation, as shown in FIG. 3, the following operation may also be performed.

In S301, the at least one piece of image information is processed, to obtain a second mapping result including second environmental characteristic information in the target area.

In S302, the first mapping result is replaced, based on the second mapping result, and the replaced mapping result is stored as the map information of the target area.

The operation of processing the at least one piece of image information to obtain the second mapping result in S301 may be performed simultaneously with the operation of transmitting the at least one piece of image information to the server in S 101.

The processing of the at least one piece of image information to obtain the second mapping result, may specifically include: processing each piece of image information in the at least one piece of image information, to obtain a first sub mapping result that is corresponding to each piece of image information; merging first sub mapping results respectively corresponding to the at least one piece of image information, to obtain the second mapping result.

The second mapping result may include second environmental characteristic information in the target area; and the number of the second environmental characteristic information contained in the second mapping result may be one or more. The second mapping result may specifically be a point cloud map, and accordingly, the second environmental characteristic information may specifically be the point cloud area information of the road marking points in the target area. Taking a road marking point as a street lamp as an example, the second mapping result may include the point cloud area information of the street lamp in the target area.

Before the above S302, the process of storing the first mapping result as the map information of the target area may also be performed, specifically including: storing the first mapping result as the map information of the target area when the first mapping result are obtained from the server and the second mapping result are not obtained.

As described above, the solution provided by this implementation may be implemented in the apparatus for processing an image set in the vehicle. Because the computing power of the apparatus for processing an image is limited, when the apparatus for processing an image has obtained the first mapping result from the server, the apparatus for processing an image may not have obtained the second mapping result. In this case, the apparatus for processing an image may save the first mapping result obtained from the server as the map information of the target area to drive the autonomous driving of the vehicle in the target area.

The method may further include: storing the second mapping result as the map information of the target area when the second mapping result is obtained and the first mapping result generated by the server is not obtained. That is, the first mapping result generated by the server may not be obtained temporarily due to network connection or other reasons. At this time, if the apparatus for processing an image has obtained the second mapping result, the apparatus for processing an image may store the second mapping result as the map information of the target area. In this case, if the apparatus for processing an image receives the first mapping result sent by the server, it may directly discard the first mapping result.

The operation in S302 of that replace the first mapping result based on the second mapping result and store the replaced mapping result as the map information of the target area, may include: continuously detecting whether the second mapping result is obtained when it is determined that the vehicle has completed image information collection; and when the second mapping result is determined to be obtained, replacing the first mapping result based on the second mapping result and storing the replaced mapping result as the map information of the target area.

It can be seen that by adopting the above solution, the second mapping result can be obtained by processing the at least one piece of image information while uploading the at least one piece of image information to the server, and then the second mapping result is used to replace the first mapping result and stored as the map information of the target area. Since the operating environment for generating the second mapping result and the operating environment for using the second mapping result as the map information of the target area are the same, using the second mapping result instead of the first mapping result as the map information of the target area can ensure the reliability of system operation.

The processing the at least one piece of image information to obtain the second mapping result may be realized in the following two ways.

In a first way, depth information that is corresponding to each of the at least one piece of image information and collected by the vehicle in real time is acquired; it is processed based on each piece of image information in the at least one piece of image information and its corresponding depth information, to obtain a sub point cloud image corresponding to each piece of image information; and the sub point cloud images corresponding to respective pieces of image information are merged, to obtain the second mapping result.

In a second way, the processing of the at least one piece of image information to obtain the second mapping result, is realized by adopting the first model saved in advance, as shown in FIG 4, which may include the followings.

In S401, the at least one piece of image information is input into a first model respectively, to obtain a first sub mapping result that is corresponding to each of the at least one piece of image information and output by the first model.

In S402, first sub mapping results respectively corresponding to the at least one piece of image information are merged, to obtain the second mapping result, in the case where it is determined that the vehicle has completed image information collection.

The operation in S401 and the operation in S101 may be executed simultaneously. For example, the i-th piece of image information is sent to the server, and the i-th piece of image information is input into the first model to obtain the first sub mapping result corresponding to the i-th piece of image information output by the first model, where i is an integer greater than or equal to 1. The i-th piece of image information is any piece of image information acquired by the apparatus for processing an image and collected by the vehicle in real time.

In addition, the process in S401 of inputting the at least one piece of image information into the first model and obtaining a first sub mapping result corresponding to each of the at least one piece of image information output by the first model, may further include: determining whether the current vehicle has completed image information collection.

That determine whether the vehicle currently completes image information collection may include: determining whether the current position of the vehicle is the end point of the driving route in the mapping task for autonomous driving; if so, determining that the vehicle completes image information collection; otherwise, determining that the vehicle has not completed image information collection.

Alternatively, that determine whether the vehicle currently completes image information collection may include: determining whether an instruction to stop image information collection is received; if so, determining that the vehicle completes image information collection processing; otherwise, determining that the vehicle has not completed image information collection.

The instruction to stop image information collection may be sent by the user. For example, although the vehicle does not reach the end point of the driving route in the mapping task for autonomous driving, the user needs to stop image information collection for other reasons, at this time, a preset key (such as a physical key or a virtual key) in the vehicle may be clicked to trigger and send the instruction to stop image information collection to the apparatus for processing an image.

The first sub mapping result corresponding to any one of the at least one piece of image information may include: location information and sub environment feature information of the sub region corresponding to the any one piece of image information. The number of the sub environment feature information may be one or more, and any piece of sub environment feature information may be the point cloud region information of a road marking point in the sub region. It should be understood that different image information in the at least one piece of image information may correspond to different sub regions, and the sub regions corresponding to any two pieces of image information in the at least one piece of image information may partially overlap.

The operation in S401 of inputting the at least one piece of image information into the first model respectively, to obtain the first sub mapping result that is corresponding to each of the at least one piece of image information and output by the first model, may include: inputting the i-th piece of image information into the first model to obtain the first sub mapping result corresponding to the i-th piece of image information output by the first model; determining whether the vehicle has completed image information collection processing; when it is determined that the vehicle has not completed image information collection, inputting the (i+1)-th piece of image information into the first model to obtain the first sub mapping result corresponding to the (i+1)-th piece of image information output by the first model; and repeating the above processing until it is determined that the vehicle has completed image information collection.

The operation in S402 of merging the first sub mapping results respectively corresponding to the at least one piece of image information, to obtain the second mapping result, in the case where it is determined that the vehicle has completed image information collection, may include: when it is determined that the vehicle has completed image information collection, detecting whether the first sub mapping result corresponding to the last piece of image information is obtained; and when the first sub mapping result corresponding to the last piece of image information is determined to be obtained, merging the first sub mapping results respectively corresponding to the at least one piece of image information, to obtain the second mapping result. The last piece of image information may be the image information obtained for the last time up to the time when it is determined that the vehicle completes image information collection.

In addition, the method may further include: if the first sub mapping result corresponding to the last piece of image information is not obtained, continuing to detect whether the first sub mapping result corresponding to the last piece of image information is obtained.

The merging of the first sub mapping results respectively corresponding to the at least one piece of image information to obtain the second mapping result, may specifically include: merging the sub environment feature information in the first sub mapping result corresponding to each piece of image information to obtain the second mapping result according to position information of the sub region in the first sub mapping result corresponding to each piece of image information in the at least one piece of image information.

The first model may be a pre-trained model and stored in the vehicle. The generating method of the first model may include: training the preset model based on the sample data, and taking the trained preset model as the first model. The first model may be a deep neural network model or a neural network model.

It should also be noted that the second model may be used on the server side to generate the first mapping result. The second model and the first model may be the same. The reason why the first model and the second model are used in this disclosure is that the first model and the second model are stored in different subjects, and the operating environments thereof may be different.

For example, the first model may be stored in the apparatus for processing an image of the vehicle, and the second model may be stored in the server. In the apparatus for processing an image of the vehicle, the operating environment of the first model may be an Advanced RISC Machine (ARM) architecture or a Graphics Processing Unit (GPU), while the operating environment of the second model in the server may be x86.

It can be seen that by adopting the above solution, the second mapping result may be obtained by processing the at least one piece of image information while uploading the at least one piece of image information to the server, and then the second mapping result may be used to replace the first mapping result and stored as the map information of the target area. Since the second mapping result is generated by the local first model, the accuracy and processing efficiency of the second mapping result obtained by local processing can be guaranteed. In addition, since the operating environment for generating the second mapping result using the first model and the operating environment for using the second mapping result as the map information of the target area are the same, using the second mapping result instead of the first mapping result as the map information of the target area can also ensure the reliability of system operation.

In one implementation, the acquiring the first mapping result generated by the server includes the following two processing methods.

In a first processing method, notification information of completing image information collection is sent to the server; and the first mapping result sent by the server is received.

In this processing method, after sending the notification information of completing image information collection, it is only necessary to wait for the server to send the first mapping result.

The notification information of completing image information collection may be used to notify the server that the vehicle has completed image information collection. Correspondingly, when receiving the notification information of completing image information collection, the server may process the received at least one piece of image information through its own second model to obtain the first mapping result, and then directly send the first mapping result; alternatively, when receiving the notification information of completing image information collection, the server may merge at least one second sub mapping result obtained by itself to obtain the first mapping result, and then directly send the first mapping result.

In this way, the first mapping result sent by the server can be received by only sending the notification information of completing image information collection once. That is, the first mapping result generated by the server can be obtained with less interaction with the server, so as to minimize the occupation of communication resources with the server.

In a second processing method, notification information of completing image information collection is sent to the server; and the first mapping result is acquired from the server, after sending a mapping result query request to the server and receiving response information of completing mapping sent by the server.

The sending the notification information of completing image information collection to the server; and acquiring the first mapping result from the server after sending a mapping result query request to the server and receiving the response information of completing mapping sent by the server refers to: sending notification information of completing image information collection to the server; periodically sending a mapping result query request to the server and detecting whether the response information of the mapping completion sent by the server is received; and at any time after the mapping result query request is sent and the response information of completing mapping sent by the server is received, acquiring the first mapping result from the server.

The period length in the operation of periodically sending a mapping result query request to the server may be set according to the actual situation, for example, it may be 1 second or 2 seconds, which is not exhaustive in this implementation.

The acquiring of the first mapping result from the server may be specifically that the vehicle downloads the first mapping result from the server.

By adopting this processing method, it is possible to periodically send a mapping result query request to the server after sending the notification of completing image information collection to the server. Once the response information of completing mapping sent by the server is received, the first mapping result can be obtained from the server, which can ensure the timeliness of obtaining the first mapping result, and ensure the processing efficiency of driving the autonomous driving of the vehicle by subsequently using the first mapping result as the map information of the target area.

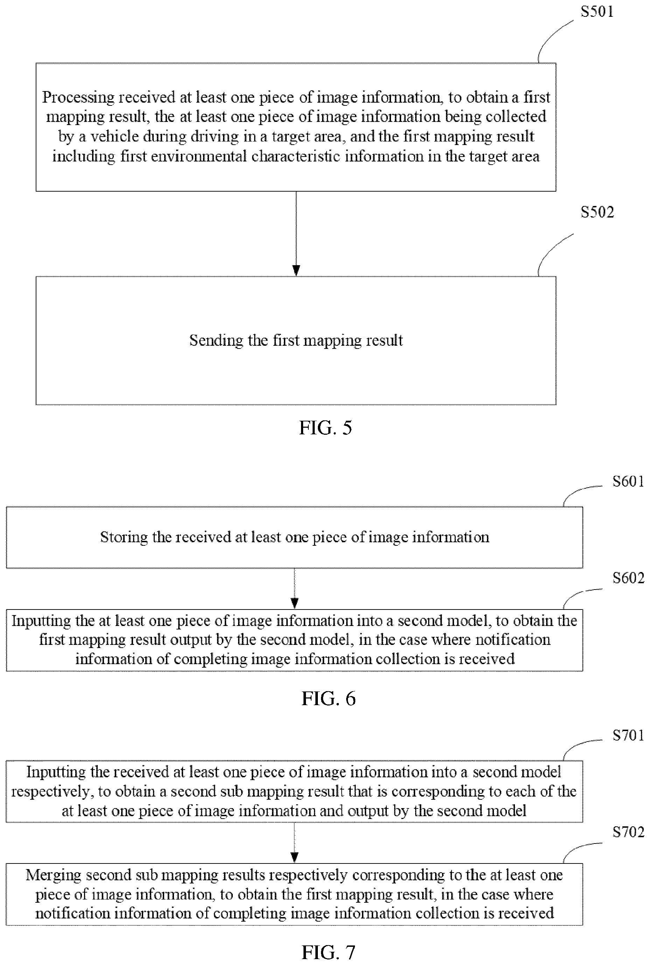

In the second aspect of embodiments of the present disclosure, further provided is a method for processing an image. As shown in FIG. 5, the method includes the followings.

In S501, received at least one piece of image information is processed, to obtain a first mapping result; the at least one piece of image information being collected by a vehicle during driving in a target area, and the first mapping result including first environmental characteristic information in the target area.

In S502, the first mapping result is sent.

In this aspect, the server may be a cloud server.

The at least one piece of image information may be uploaded to the server in real time by the apparatus for processing an image of the vehicle. The apparatus for processing an image of the vehicle may be an apparatus for processing an image provided or installed in the vehicle.

The first mapping result may include first environmental characteristic information in the target area; the number of the first environmental characteristic information contained in the first mapping result may be one or more. The first mapping result may specifically be a point cloud map. Accordingly, the first environmental characteristic information may specifically refer to the point cloud area information of the road marking points in the target area. Taking a road marking point as a ground marking line as an example, the first mapping result may include the point cloud area information of the ground marking line in the target area.

The sending of the first mapping result may specifically mean that the server sends the first mapping result to the apparatus for processing an image of the vehicle.

The solution provided in the second aspect of embodiments of the present disclosure may process at least one piece of image information to obtain the first mapping result, and send the first mapping result. With higher computing power, the mapping efficiency can be guaranteed, and then the vehicle can be guaranteed to obtain the map information of the final target area in a timely and efficient manner, so as to improve the overall processing efficiency.

The processing of the received at least one piece of image information to obtain the first mapping result, may include the following two implementations, which are described below.

In one implementation, as shown in FIG. 6, the processing of the received at least one piece of image information to obtain the first mapping result may include the followings.

In S601, the received at least one piece of image information is stored.

In S602, the at least one piece of image information is input into a second model, to obtain the first mapping result output by the second model, in the case where notification information of completing image information collection is received,.

The storing of the received at least one piece of image information may refer to that when any piece of image information sent by the apparatus for processing an image of the vehicle is received, only storing the any one piece of image information. For example, when the j-th piece of image information sent from the vehicle is received, only the j-th piece of image information is stored, where j is an integer greater than or equal to 1.

The notification information of completing image information collection may be used to indicate that the vehicle has completed image information collection.

The inputting of the at least one piece of image information into a second model to obtain the first mapping result output by the second model, may specifically include: inputting all the stored at least one piece of image information into the second model to obtain the first mapping result output by the second model.

That is, in the above processing, all image information uploaded by the vehicle may be processed at one time to directly obtain the first mapping result.

The second model may be a pre trained model and stored in the server. The generating method of the second model may include: training a preset model based on the sample data, and taking the trained preset model as the second model. The second model may be a deep neural network model or a neural network model. The similarity and difference between the second model and the first model in the first aspect of embodiments of the present disclosure is consistent with the description in the first aspect of embodiments of the present disclosure, which will not be repeated herein.

It can be seen that by adopting the above solution, the first mapping result obtained by one-time processing the at least one piece of image information using the second model can reduce the number of mapping through the second model, thus reducing the number of times of occupying processing resources, and also ensuring the processing efficiency.

In another implementation, the processing of the received at least one piece of image information to obtain a first mapping result, as shown in FIG. 7, may include the followings.

In S701, the received at least one piece of image information is input into a second model, to obtain a second sub mapping result that is corresponding to each of the at least one piece of image information and output by the second model.

In S702, second sub mapping results respectively corresponding to the at least one piece of image information are merged, to obtain the first mapping result, in the case where notification information of completing image information collection is received.

The inputting of the received at least one piece of image information into the second model, to obtain the second sub mapping result that is corresponding to each of the at least one piece of image information and output by the second model, may include: when the j-th image information is currently received, inputting the j-th piece of image information into the second model, to obtain the second sub mapping result that is corresponding to the j-th piece of image information and output by the second model, where j is an integer greater than or equal to 1. The j-th piece of image information is any currently received piece of image information.

The second sub mapping result may include: location information of a sub-region corresponding to the currently received image information and sub environment feature information. It should be understood that different pieces of image information in the at least one piece of image information may correspond to different sub-regions, and the sub-regions corresponding to any two pieces of image information in the at least one piece of image information may partially overlap. The sub environment feature information in the sub-region of any one piece of the at least one piece of image information may refer to one or more pieces of the sub environment feature information in the sub-region; Any piece of sub environment feature information may refer to point cloud area information of any road marking point.

The operation in S702 of that merge the second sub mapping results corresponding to the at least one piece of image information, to obtain the first mapping result, in the case where the notification information of completing image information collection is received, may specifically include: when the notification information of completing image information collection is received, detecting whether a second sub mapping result corresponding to the last piece of image information is obtained; and when it is determined that the second sub mapping result corresponding to the last piece of image information is obtained, merging the second sub mapping results corresponding to the respective at least one piece of image information to obtain the first mapping result. The notification information of completing image information collection may be sent from the apparatus for processing an image of the vehicle to the server.

In addition, the method may further include: when the notification information of completing image information collection is received and the second sub mapping result corresponding to the last piece of image information is not obtained, continue to detect whether the second sub mapping result corresponding to the last image information is obtained.

The merging of the second sub mapping results respectively corresponding to the at least one piece of image information, to obtain the first mapping result, may specifically include: merging the sub environment feature information in the second sub mapping result corresponding to each piece of image information according to location information of a sub-region in the second sub mapping result corresponding to each piece of image information in the at least one piece of image information to obtain the first mapping result.

The second model may be a pre-trained model and stored in the server. The generating method of the second model may include: training a preset model based on the sample data, and taking the trained preset model as the second model. The second model may be a deep neural network model or a neural network model.

It can be seen that with the above processing method, the second model is used to process the image at the same time of receiving any piece of image information to obtain its corresponding second sub mapping result. When it is determined that the vehicle completes image information collection, the first mapping result can be obtained by merging all the second sub mapping results, which improves the efficiency of obtaining the first mapping result.

In one implementation, the sending of the first mapping result may include two processing methods as follows.

In a first processing method, when it is determined that the first mapping result is obtained, the first mapping result is directly sent to an apparatus for processing an image of the vehicle.

In this processing method, since the notification information of completing image information collection has been received in advance, it is not necessary to interact with the apparatus for processing an image of the vehicle for more information. As long as it is determined that the first mapping result has been obtained, it may directly send the first mapping result to the apparatus for processing an image of the vehicle, thus, the first mapping result can be sent with only less interactive information with the apparatus for processing an image of the vehicle, so that the occupation of communication resources with the vehicle can be minimized.

In a second processing method, when receiving a mapping result query request and sending response information of the mapping completion, the first mapping result is sent.

Specifically, the above processing method may include: receiving the k-th mapping result query request sent by the apparatus for processing an image of the vehicle, and detecting whether the first mapping result is obtained, k being an integer greater than or equal to 1; if it is determined that the first mapping result is obtained, sending response information of the mapping completion to the apparatus for processing an image of the vehicle, and sending the first mapping result to the apparatus for processing an image of the vehicle; if the first mapping result is not obtained, sending response information that the mapping has not been completed to the apparatus for processing an image of the vehicle, and then continuing to wait for the (k+1)-th mapping result query request sent by the apparatus for processing an image of the vehicle, repeating the above processing until determining that the first mapping result is obtained.

By adopting this method, the first mapping result can be provided to the apparatus for processing an image of the vehicle once receiving the mapping result query request sent by the apparatus for processing an image of the vehicle and determining that the first mapping result has been obtained. This can ensure that the apparatus for processing an image of the vehicle can obtain the first mapping result in real time, which ensures the efficiency that the vehicle replacing the map information of the target area with the first mapping result for storing and drives the subsequent autonomous driving of the vehicles.

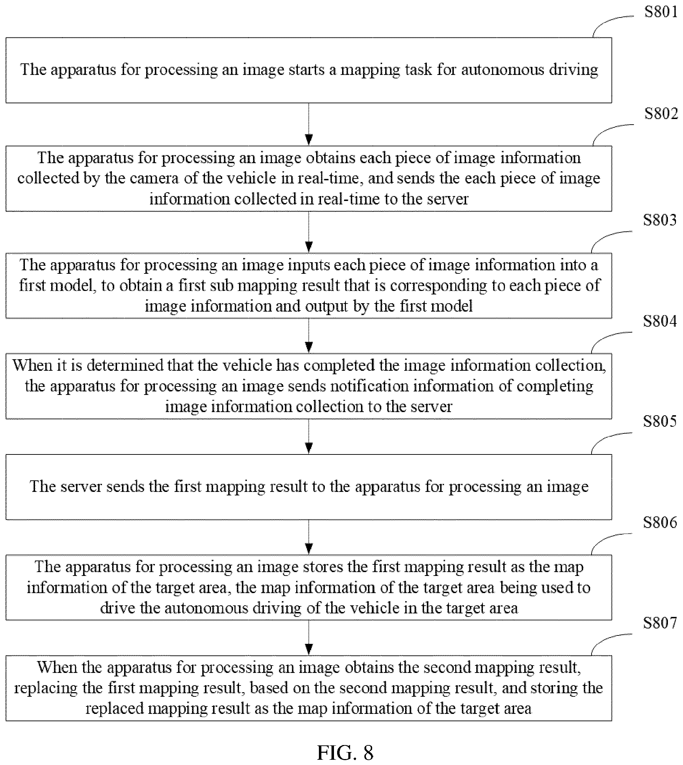

Finally, in combination with the above first and second aspects of embodiments of the present disclosure, taking the executing body in the first aspect of embodiments of the present disclosure as the apparatus for processing an image, that is, the apparatus for processing an image provided or installed in the vehicle, and the executing body in the second aspect of embodiments of the present disclosure as the server as examples, referring to FIG. 8, which may include the followings.

In S801, the apparatus for processing an image starts a mapping task for autonomous driving.

The mapping task for autonomous driving may be at least associated with the target area, and may be further related to a driving route in the target area.

The mapping task for autonomous driving may be started by control of a user, or may be started by the vehicle automatically.

After the operation in S801 is completed, the vehicle may be controlled to start driving. For example, the vehicle may be controlled to start driving on the driving route including the target area.

In S802, the apparatus for processing an image obtains each piece of image information collected by the camera of the vehicle in real-time, and sends the each piece of image information collected in real-time to the server.

Accordingly, the server receives the each piece of image information.

After the server receives each piece of image information in this operation, the processing by the server may include: after receiving each piece of image information, the server may only store each piece of image information without processing.

Alternatively, while receiving each piece of image information, the server inputs each piece of image information into the second model, to obtain a second sub mapping result that is corresponding to each piece of image information and output by the second model.

In S803, the apparatus for processing an image inputs each piece of image information into a first model, to obtain a first sub mapping result that is corresponding to each piece of image information and output by the first model.

The operation in S802 and the operation in S803 may be executed simultaneously.

In S804, when it is determined that the vehicle has completed the image information collection, the apparatus for processing an image sends notification information of completing image information collection to the server.

In addition, when the apparatus for processing an image determines that the vehicle has completed the image information collection, the apparatus for processing an image may further perform the following operations.

The apparatus for processing an image continuously determines whether the first sub mapping result corresponding to the last image piece of image information is obtained; when it is determined that the first sub mapping result corresponding to the last piece of image information is obtained, the apparatus for processing an image merges the sub mapping results corresponding to respective pieces of image information to obtain the second mapping result.

It should be noted that since the computing power of the apparatus for processing an image is limited, the time to obtain the second mapping result may be after the subsequent S806.

In S805, the server sends the first mapping result to the apparatus for processing an image.

Specifically, if the server only stores each piece of image information without processing after receiving each piece of image information; then, when receiving the notification information of completing image information collection sent by the apparatus for processing an image, the server inputs each piece of image information into the second model to obtain the first mapping result output by the second model, and sends the first mapping result to the apparatus for processing an image.

When the server receives each piece of image information, and inputs each piece of image information into the second model, to obtain a second sub mapping result that is corresponding to each piece of image information and output by the second model; then, when the server receives the notification information of completing image information collection and determines that the second sub mapping result corresponding to the last image information is obtained, the server merges the second sub mapping results corresponding to respective pieces of image information to obtain the first mapping result, and sends the first mapping result to the apparatus for processing an image.

In S806, the apparatus for processing an image stores the first mapping result as the map information of the target area, the map information of the target area being used to drive the autonomous driving of the vehicle in the target area.

It should be understood that as described in foregoing S804, the apparatus for processing an image continuously determines whether the first sub mapping result corresponding to the last image piece of image information is obtained; when it is determined that the first sub mapping result corresponding to the last piece of image information is obtained, the apparatus for processing an image merges the sub mapping results corresponding to respective pieces of image information to obtain the second mapping result. Since the computing power of the image processing apparatus is limited, the time to obtain the second mapping result may be after S806.

Therefore, after the operation in S806 is completed, the method may further include S807 in which, when the apparatus for processing an image obtains the second mapping result, the first mapping result is replaced, based on the second mapping result, and the replaced mapping result is stored as the map information of the target area.

In the solution provided by embodiments of the present disclosure, the image information may be uploaded to the server so that the server processes the image information to obtain the first mapping result. After the first mapping result is obtained from the server, the first mapping result may be stored as the map information of the target area for the subsequent autonomous driving of the vehicle. Because the server has higher computing power, the efficiency of obtaining the first mapping result can be improved by using the server to generate the first mapping result, so that the map information of the final target area can be obtained in a timely and efficient manner.

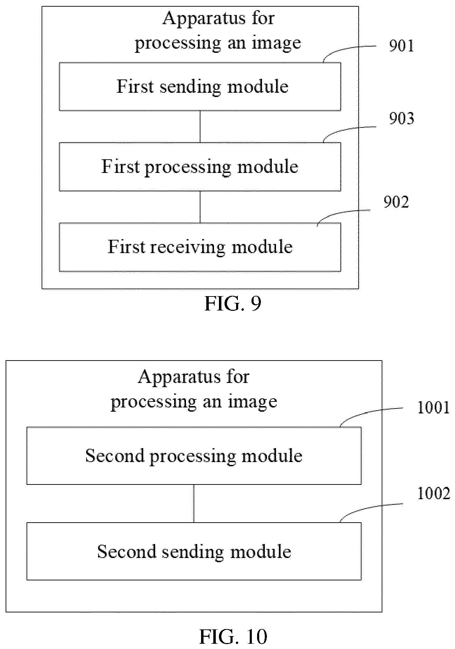

In the third aspect of embodiments of the present disclosure, further provided is an apparatus for processing an image. As shown in FIG. 9, the apparatus includes: a first sending module 901 configured to send at least one piece of image information to a server, the at least one piece of image information being collected by a vehicle during driving in a target area; a first receiving module 902 configured to acquire a first mapping result generated by the server, the first mapping result including the first environmental characteristic information in the target area; and a first processing module 903 configured to store the first mapping result as the map information of the target area, the map information of the target area being used to drive the autonomous driving of the vehicle in the target area.

In one implementation, the first processing module 903 is configured to process the at least one piece of image information, to obtain a second mapping result including second environmental characteristic information in the target area; replace the first mapping result, based on the second mapping result; and store the replaced mapping result as the map information of the target area.

In one implementation, the first processing module 903 is configured to input the at least one piece of image information into a first model respectively, to obtain a first sub mapping result that is corresponding to each of the at least one piece of image information and output by the first model; and merge first sub mapping results respectively corresponding to the at least one piece of image information, to obtain the second mapping result, in the case where it is determined that the vehicle has completed image information collection.

In one implementation, the first sending module 901 is configured to send notification information of completing image information collection to the server; and the first receiving module 902 is configured to receive the first mapping result sent by the server.

In one implementation, the first sending module 901 is configured to send notification information of completing image information collection to the server, and send a mapping result query request to the server; and the first receiving module 902 is configured to acquire the first mapping result from the server, after receiving response information of completing mapping sent by the server.

The above apparatus for processing an image provided in this aspect may be provided in the vehicle. The specific processing of each module in the apparatus for processing an image in this aspect is the same as that in the method for processing an image in the first aspect of embodiments of the present disclosure, which will not be repeated here.

In the fourth aspect of embodiments of the present disclosure, provided is an apparatus for processing an image. As shown in FIG. 10, the apparatus includes: a second processing module 1001 configured to process received at least one piece of image information, to obtain a first mapping result, the at least one piece of image information being collected by a vehicle during driving in a target area, and the first mapping result including first environmental characteristic information in the target area; and a second sending module 1002 configured to send the first mapping result.

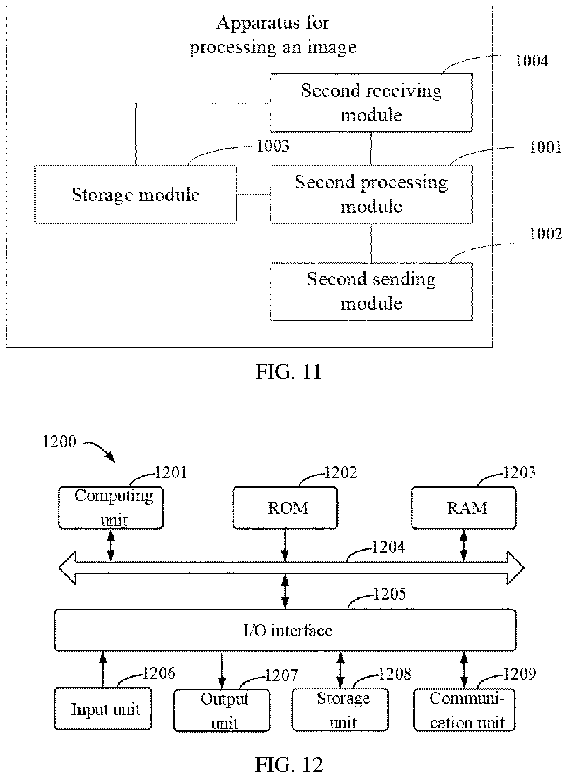

On the basis of the apparatus for processing an image illustrated in FIG. 10, in one implementation, as shown in FIG. 11, the apparatus further includes: a second receiving module 1004 configured to receive the at least one piece of image information; and receive notification information of completing image information collection; and a storage module 1003 configured to store the at least one piece of image information received by the second receiving module. The second processing module 1001 is further configured to input the at least one piece of image information into a second model, to obtain the first mapping result output by the second model, in the case where the second receiving module receives the notification information of completing image information collection.

In one implementation, the second receiving module 1004 is configured to receive the at least one piece of image information; and receive notification information of completing image information collection. The second processing module 1001 is configured to input the at least one piece of image information received by the second receiving module into a second model respectively, to obtain a second sub mapping result that is corresponding to each of the at least one piece of image information and output by the second model; and merge second sub mapping results respectively corresponding to the at least one piece of image information, to obtain the first mapping result, in the case where the second receiving module receives the notification information of completing image information collection.

In one implementation, the second receiving module 1004 is configured to receive a mapping result query request. The second sending module 1002 is further configured to send the first mapping result, after sending response information of completing mapping.

The above apparatus for processing an image provided in this aspect may be provided in a server. The specific processing of each module in the apparatus for processing an image in this aspect is the same as that in the method for processing an image in the second aspect of embodiments of the present disclosure, which will not be repeated here.

In the technical solution of the present disclosure, the acquisition, storage and application of the user's personal information involved are all in compliance with the provisions of relevant laws and regulations, and do not violate public order and good customs.

According to embodiments of the present disclosure, the present disclosure further provides an electronic device, a readable storage medium and a computer program product.

FIG. 12 shows a schematic block diagram of an example electronic device 1200 that may be used to implement embodiments of the present disclosure. The electronic device is intended to represent various forms of digital computers, such as, laptops, desktop, workstations, personal digital assistants, servers, blade servers, mainframe computers, and other suitable computers. Electronic devices may also represent various forms of mobile devices, such as, personal digital processing, cellular phones, smart phones, wearable devices and other similar computing devices. The components shown herein, their connections and relationships, and their functions are merely examples, and are not intended to limit embodiments of the present disclosure described and/or required herein.

As shown in FIG. 12, the device 1200 includes a computing unit 1201 that may perform various appropriate actions and processes according to a computer program stored in a read only memory (ROM) 1202 or a computer program loaded from the storage unit 1208 into a random access memory (RAM) 1203. In RAM 1203, various programs and data required for the operation of device 1200 may also be stored. The computing unit 1201, Rom 1202 and RAM 1203 are connected to each other through a bus 1204. The input / output (I / O) interface 1205 is also connected to the bus 1204.

A plurality of components in the device 1200 are connected to the I/O interface 1205, including: an input unit 1206, such as a keyboard, a mouse, etc.; an output unit 1207, such as various types of displays, speakers, etc.; a storage unit 1208, such as a magnetic disk, an optical disk, or the like; and a communication unit 1209, such as a network card, a modem, a wireless communication transceiver, etc. The communication unit 1209 allows the device 1200 to exchange information / data with other devices through computer networks such as the Internet and / or various telecommunication networks.

The computing unit 1201 may be various general-purpose and / or special-purpose processing components with processing and computing capabilities. Some examples of the computing unit 1201 include, but are not limited to, a central processing unit (CPU), a graphics processing unit (GPU), various dedicated artificial intelligence (AI) computing chips, various computing units running machine learning model algorithms, digital signal processors (DSPS), and any appropriate processors, controllers, microcontrollers, etc. The calculation unit 1201 performs various methods and processes described above, such as an on-board data processing method. For example, in some implementations, the on-board data processing method may be implemented as a computer software program that is tangibly contained in a machine-readable medium, such as a storage unit 1208. In some implementations, part or all of the computer program may be loaded and / or installed on the device 1200 via ROM 1202 and / or communication unit 1209. When the computer program is loaded into the ram 1203 and executed by the computing unit 1201, one or more steps of the respective methods described above may be performed. Alternatively, in other implementations, the computing unit 1201 may be configured to perform the respective methods by any other suitable means (such as, by means of firmware).

Various implementations of the systems and technologies described above in this paper may be implemented in digital electronic circuit system, integrated circuit system, field programmable gate array (FPGA), application specific integrated circuit (ASIC), application specific standard product (ASSP), system on chip (SOC), load programmable logic device (CPLD), computer hardware, firmware, software, and / or combinations thereof. These various implementations may include being implemented in one or more computer programs that may be executed and / or interpreted on a programmable system including at least one programmable processor, which may be a dedicated or general-purpose programmable processor that may receive data and instructions from a storage system, at least one input device, and at least one output device, And transmitting data and instructions to the storage system, the at least one input device, and the at least one output device.

The program code for implementing the methods of the present disclosure may be written in any combination of one or more programming languages. These program codes may be provided to the processor or controller of general-purpose computer, special-purpose computer or other programmable data processing device, so that when executed by the processor or controller, the program code enables the functions / operations specified in the flow chart and / or block diagram to be implemented. The program code may be executed completely on the machine, partially on the machine, partially on the machine and partially on the remote machine as a separate software package, or completely on the remote machine or server.

In the context of the present disclosure, the machine-readable medium may be a tangible medium that may contain or store a program for use by or in combination with an instruction execution system, device or device. The machine-readable medium may be a machine-readable signal medium or a machine-readable storage medium. Machine readable media may include, but are not limited to, electronic, magnetic, optical, electromagnetic, infrared, or semiconductor systems, devices or devices, or any suitable combination of the above. More specific examples of machine-readable storage media may include an electrical connection based on one or more lines, a portable computer disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any suitable combination of the above.

In order to provide interaction with the user, the systems and technologies described herein may be implemented on a computer that has: a display apparatus for displaying information to the user (e.g., a cathode ray tube (CRT) or a liquid crystal display (LCD) monitor)); and a keyboard and a pointing device (e.g., a mouse or a trackball) through which the user may provide input to the computer. Other types of devices may also be used to provide interaction with the user. For example, feedback provided to the user may be any form of sensory feedback (e.g., visual feedback, auditory feedback, or tactile feedback); and it is capable of receiving input from the user in any form (including acoustic input, voice input, or tactile input).

The systems and technologies described herein may be implemented in a computing system that includes back-end components (e.g., as a data server), a computing system that includes middleware components (e.g., as an application server), a computing system that includes front-end components (e.g., as a user computer with a graphical user interface or web browser through which the user may interact with the implementation of the systems and technologies described herein), or a computing system that includes any combination of the back-end components, middleware components, or front-end components. The components of the system may be connected to each other through any form or kind of digital data communication (e.g., a communication network). Examples of the communication network include a local area network (LAN), a wide area network (WAN), and the Internet.

A computer system may include a client and a server. The client and server are generally far away from each other and usually interact through a communication network. A relationship between the client and the server is generated by computer programs running on a corresponding computer and having a client-server relationship with each other. The server may be a cloud server, a distributed system server, or a server combined with a block chain.

It should be understood that various forms of processes shown above may be used to reorder, add or delete steps. For example, steps described in the present disclosure may be executed in parallel, sequentially, or in a different order, as long as the desired result of the technical solution disclosed in the present disclosure can be achieved, and this is not limited herein.

The foregoing specific embodiments do not constitute a limitation on the protection scope of the present disclosure. Those of ordinary skill in the art should understand that various modifications, combinations, sub-combinations and substitutions may be made according to design requirements and other factors. Any modification, equivalent replacement and improvement made within the principle of the present disclosure shall be included in the protection scope of the present disclosure.

## Claims

1. A method for processing an image, **characterized by** comprising:
sending (S101) at least one piece of image information to a server, wherein the at least one piece of image information is collected by a vehicle during driving in a target area;
acquiring (S102) a first mapping result generated by the server, the first mapping result comprising first environmental characteristic information in the target area; and
storing (S103) the first mapping result as map information of the target area, wherein the map information of the target area is used to drive autonomous driving of the vehicle in the target area.

2. The method of claim 1, further comprising:
processing (S301) the at least one piece of image information, to obtain a second mapping result comprising second environmental characteristic information in the target area;
replacing (S302) the first mapping result, based on the second mapping result; and
storing (S302) the replaced mapping result as the map information of the target area.

3. The method of claim 2, wherein processing (S301) the at least one piece of image information to obtain the second mapping result, comprises:
inputting (S401) the at least one piece of image information into a first model respectively, to obtain a first sub mapping result that is corresponding to each of the at least one piece of image information and output by the first model; and
merging (S402) first sub mapping results respectively corresponding to the at least one piece of image information, to obtain the second mapping result, in a case of it is determined that the vehicle has completed image information collection.

4. The method of any one of claims 1-3, wherein acquiring (S102) the first mapping result generated by the server, comprises:
sending notification information of completing image information collection to the server; and receiving the first mapping result sent by the server; or
sending notification information of completing image information collection to the server;
and acquiring the first mapping result from the server, after sending a mapping result query request to the server and receiving response information of completing mapping sent by the server.

5. A method for processing an image, **characterized by** comprising:
processing (S501) received at least one piece of image information, to obtain a first mapping result; wherein the at least one piece of image information is collected by a vehicle during driving in a target area, and the first mapping result comprises first environmental characteristic information in the target area; and
sending (S502) the first mapping result.

6. The method of claim 5, wherein processing (S501) the received at least one piece of image information, to obtain the first mapping result, comprises:
storing (S601) the received at least one piece of image information; and inputting (S602) the at least one piece of image information into a second model, to obtain the first mapping result output by the second model, in a case of notification information of completing image information collection is received; or
inputting (S701) the received at least one piece of image information into a second model respectively, to obtain a second sub mapping result that is corresponding to each of the at least one piece of image information and output by the second model; and merging (S702) second sub mapping results respectively corresponding to the at least one piece of image information, to obtain the first mapping result, in a case of notification information of completing image information collection is received.

7. The method of any one of claims 5-6, wherein sending (S502) the first mapping result, comprises:
sending the first mapping result, after receiving a mapping result query request and sending response information of completing mapping.

8. An apparatus for processing an image, **characterized by** comprising:
a first sending module (901), configured to send at least one piece of image information to a server; wherein the at least one piece of image information is collected by a vehicle during driving in a target area;
a first receiving module (902), configured to acquire a first mapping result generated by the server, the first mapping result comprising first environmental characteristic information in the target area; and
a first processing module (903), configured to store the first mapping result as map information of the target area, wherein the map information of the target area is used to drive autonomous driving of the vehicle in the target area.

9. An apparatus for processing an image, **characterized by** comprising:
a second processing module (1001), configured to process received at least one piece of image information, to obtain a first mapping result; wherein the at least one piece of image information is collected by a vehicle during driving in a target area, and the first mapping result comprises first environmental characteristic information in the target area; and
a second sending module (1002), configured to send the first mapping result.

10. An electronic device, comprising:
at least one processor; and
a memory communicatively connected to the at least one processor;
wherein the memory stores instructions executable by the at least one processor, the instructions when executed by the at least one processor, causing the at least one processor to execute the method of any one of claims 1-4.

11. An electronic device, comprising:
at least one processor; and
a memory communicatively connected to the at least one processor;
wherein the memory stores instructions executable by the at least one processor, the instructions when executed by the at least one processor, causing the at least one processor to execute the method of any one of claims 5-7.

12. A non-transitory computer-readable storage medium storing a computer instruction, wherein the computer instruction is used to cause a computer to execute the method of any one of claims 1-4 or 5-7.

13. A computer program product, comprising a computer program, wherein when the computer program is executed by a processor, the method of any one of claims 1-4 or 5-7 is implemented.

14. A vehicle, comprising the electronic device according to claim 10.

15. A server, comprising the electronic device according to claim 11.
